# EUROPEAN PATENT SPECIFICATION

(11) **EP 3 534 688 B1**
(45) Date of publication and mention of the grant of the patent: **26.01.2022**
(21) Application number: 17867716.7
(22) Date of filing: 01.11.2017
(51) Int. Cl.: A01G 23/08, B27L 7/00, A01D 43/08, B26D 7/01, A01G 23/091, B27L 11/00

(54) **CUTTING DEVICE**
SCHNEIDVORRICHTUNG
DISPOSITIF DE COUPE

(30) Priority: 01.11.2016 FI 20165822
(43) Date of publication of application: 11.09.2019
(73) Proprietor: KX-Treeshears Oy, 44200 Suolahti (FI)
(72) Inventor: TOSSAVAINEN, Kimmo, 44200 Suolahti (FI)
(74) Representative: Kespat Oy
(86) International application number: PCT/FI2017/050754
(87) International publication number: WO 2018/083382

(56) References cited:
- EP-A1- 0 562 406
- CA-A- 1 080 586
- DE-A1- 3 812 272
- DE-A1-102015 004 727
- FI-C- 97 530
- FR-A1- 2 293 870
- US-A- 1 940 216
- US-A- 2 532 174
- US-A- 4 660 777
- US-A- 4 706 446
- US-A- 4 958 670

## Description

The invention is related to a cutting device, according to the preamble of claim 1. Such a cutting device is known from the document FR2293870 A1.

A Finnish utility model registration No. 8478 proposes a device for forest management. The device includes a cutter equipped with a cutting blade that is rotatable in two directions. The cutting blade serving as the force member has toothing for both directions of rotation. In addition, the device includes a counterpart, against which wood to be cut is supported, and a power source for rotating the cutting blade. At the same time, the toothing of the cutting blade bites into the wood.

The rotation of the cutting blade requires a lot of power. In addition, it takes time to cut trunks thicker than twigs, particularly when wood is poorly kept in place. In other words, the cutting point easily changes when the device vibrates. For the same reason, the device must be pressed against brushwood in order for the cutting blade to bite. On the other hand, brushwood bends easily and brushwood may be pushed in between the cutting blade and the counterpart, because the force member and the frame containing the counterparts are at a distance from each other in the axial direction.

A finger bar cutter is also known, wherein the counter construction is composed of parallel projections forming a bar. Material to be cut is guided between the bars, and the force member extending thereto cuts off the material in cooperation with the bars.

A finger bar cutter also requires high power for moving the massive force member back and forth. In addition, material to be cut is crushed when the force member hits it. On the other hand, a thin material is poorly cut off as the material bends between the counter construction and the force member. In other words, a finger bar cutter only functions with material of a certain thickness. Furthermore, material to be cut tends to escape from the space between the projection and the force member; thus, the finger bar cutter also needs to be pressed against the material. In this case, there is a risk that the material is pushed in between the projections. Then the material sticks and the force member must consequently be stopped and the finger bar cutter must be pulled backwards in the working direction.

Chain crushers also exist, wherein the force member is composed of one or more chains. The chain crusher completely lacks a counter construction. A chain rotating at a high speed crushes brushwood. In this case, the cutting point becomes rough.

The object of the invention is to provide a new type of cutting device that requires less power than before but, in addition to thick twigs and sprouts, can also be used to cut thin material, such as grass. The characteristic features of the cutting device according to this invention become apparent from the appended claims. The cutting device according to the invention utilises a rotating movement, which provides a slitting cut. At the same time, evasion of material is avoided achieving a fast and reliable cut-off of the material. With its new and surprising design, the cutting device additionally dispenses the amount of material to be cut, the cutting thus being fast and reliable. The efficiency and particularly the working width of the cutting device can be easily increased. The cutting device can also be manufactured so that it cuts from end to end, which increases the possible applications of the cutting device.

The invention is described below in detail by making reference to the appended drawings that illustrate some of the embodiments of the invention, in which:
- Figure 1a: is a basic top view of a cutting device according to the invention,
- Figure 1b: is a basic bottom view of a cutting device according to the invention,
- Figure 2a: is a top view of an example of a cutting device according to the invention in an initial step of cutting,
- Figure 2b: is an oblique front top view of the cutting device of Figure 2a,
- Figure 2c: is a rear view of the cutting device of Figure 2a,
- Figure 3a: is a top view of a modification of a cutting device according to the invention,
- Figure 3b: is a top view of a second modification of a cutting device according to the invention,
- Figure 4a: illustrates a second embodiment of a counter construction according to the invention,
- Figure 4b: illustrates an embodiment of a force member according to the invention,
- Figure 5a: is an end view of a third modification of a cutting device according to the invention,
- Figure 5b: is a front view of the cutting device of Figure 5a,
- Figure 5c: is a top view of the cutting device of Figure 5a,
- Figure 6a: illustrates an adjustable force member according to the invention,
- Figure 6b: is a partial enlargement of an adjustable force member according to the invention.

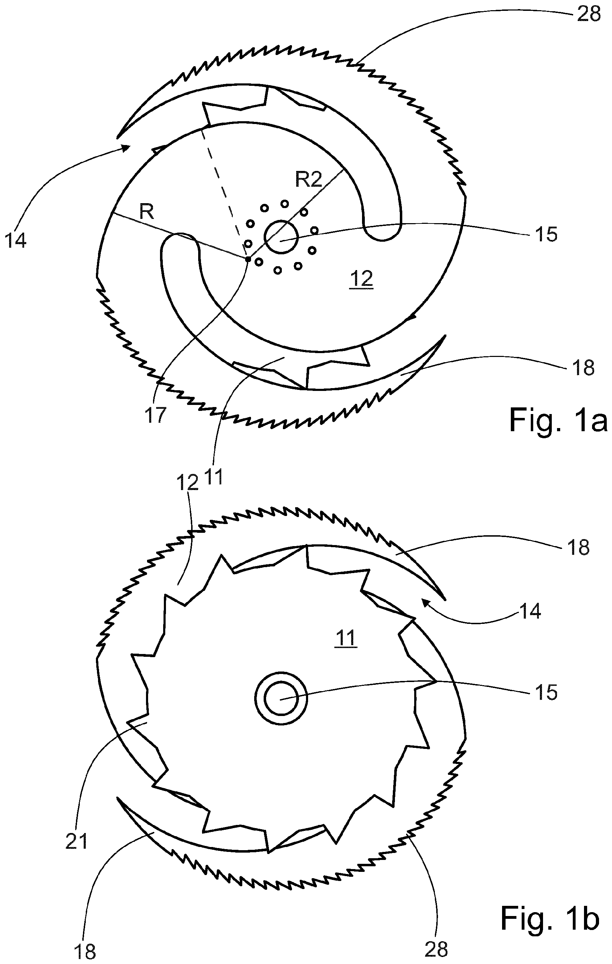

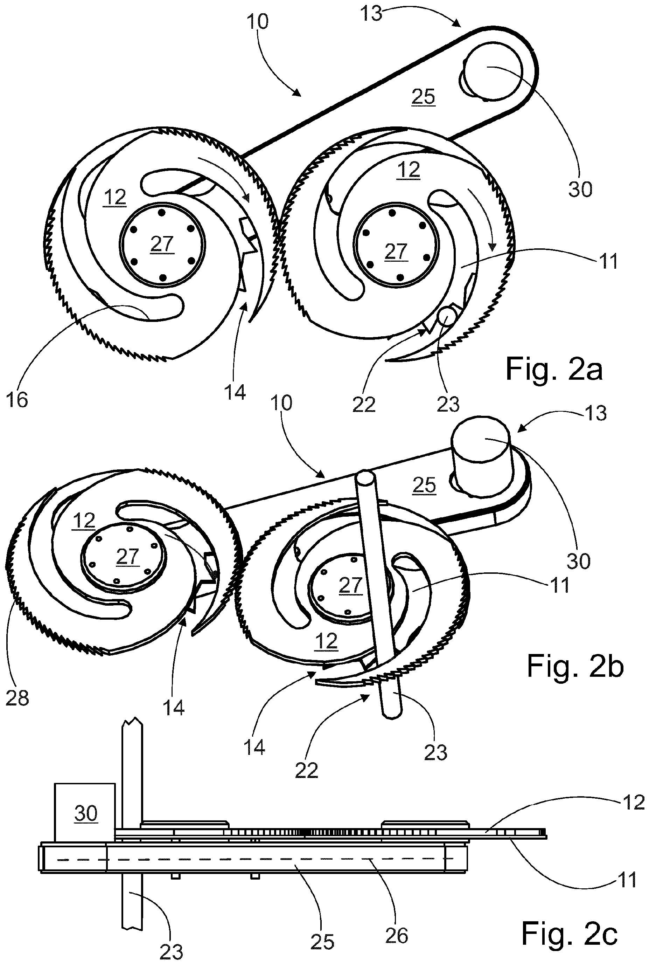

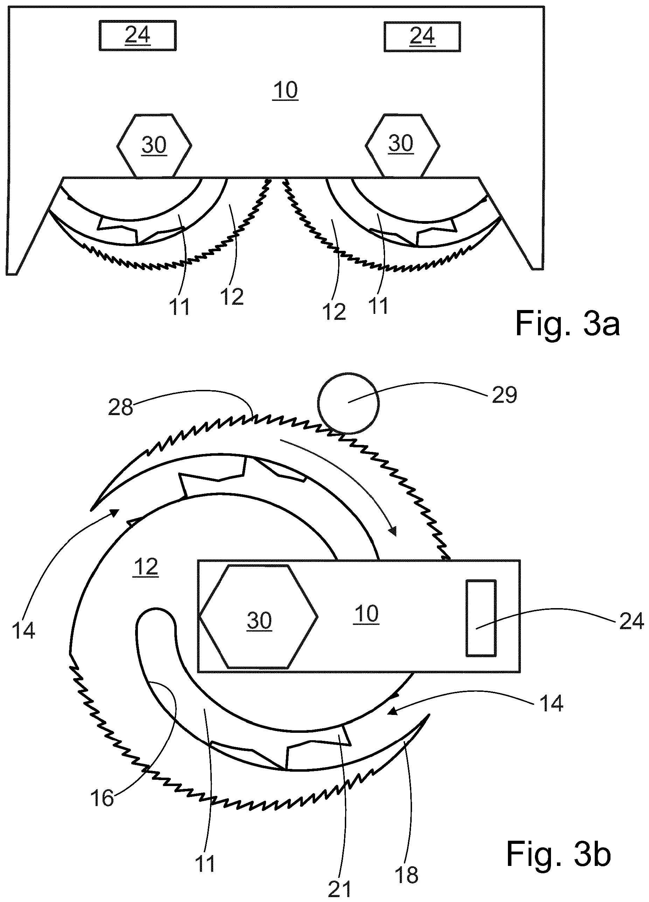

Figures 1a and 1b illustrate basic views of a cutting device according to the invention. Figure 1a provides a top view and Figure 1b is a bottom view. The cutting device includes a frame 10. The frame 10 is illustrated in Figures 2a, 2b, 2c, 3a and 3b. The cutting device is fastened by its frame, for example, to a lifting device or a loader of a mobile work machine. On the other hand, the cutting device can be equipped with wheels or skids, in which case the cutting device can be pushed or pulled. The cutting device can also be equipped with a power source, in which case the cutting device is an independent device. In this case, a battery, for example, can be used as the power source. The power source of the mobile work machine is advantageously used to operate the cutting device.

The cutting device also includes a counter construction 11 fitted to the frame 10. In addition, the cutting device includes a force member 12 rotatably supported to the frame 10 and extending up to the counter construction 11. In other words, the force member cuts off the material together with the counter construction. In the cutting device, the counter construction 11 and the force member 12 are arranged on top of each other in the axial direction relative to the axis of rotation 15 of the force member 12. In addition to this, the cutting device includes equipment 13 for rotating the force member 12 and thereby for cutting material in cooperation with the counter construction 11. According to the invention, the force member 12 includes a profile 14 for taking the material to be cut against the counter construction 11 for cutting the material. According to the invention, material is taken with the profile towards the axis of rotation 15 of the force member 12, thereby uniformly loading the force member.

Therefore, due to the profile, the material to be cut cannot escape, but always ends up against the counter construction. In other words, evasion of the material to be cut is avoided. In this case, the material is reliably cut off. The efficiency of the cutting device can easily be increased. The first method is to increase the number of profiles. According to the invention, the force member 12 has between 1 and 6, more preferably between 2 and 4 profiles 14. In this case, the efficiency remains good and the rotation of the force member is kept uniform. At the same time, the profiles dispense a suitable amount of material to be cut between the profile and the counter construction. Each profile takes its part of the material and moves it against the counter construction. As shown in the figures, two profiles are included in each force member. The profiles are advantageously arranged uniformly distributed so that the force member is balanced and the force member is uniformly loaded.

The figures illustrate one type of an advantageous profile 14, which is preferably a spiral aperture 16. Generally, a point moving along the spiral aperture continuously approaches from the centre. At the same time, the distance of the spiral aperture from the axis of rotation and particularly from the counter construction decreases, whereat the material in the spiral aperture is inevitably pressed against the counter construction becoming simultaneously cut off. More specifically, the radius of curvature R of the spiral aperture decreases in the direction of rotation of the force member 12. The radius of curvature may decrease continuously, or the border of the spiral aperture can be formed with two radii of curvature. A single radius of curvature can also be used, when the centre of curvature is suitably selected. For example, the centre of curvature can be selected at a point different from the axis of rotation of the force member. In Figure 1a, the centre of curvature 17 is offset from the axis of rotation 15 and it is formed, first from one radius of curvature R and then from a second radius of curvature R2. The change point of the radii of curvature is illustrated with a broken line in Figure 1a. Firstly, in practice, the sickle-like tip 18 of the force member 12 takes part of the material to be cut to the spiral aperture 16 and brings it towards the counter construction 11. At the same time, the material is pressed against the counter construction and is cut off.

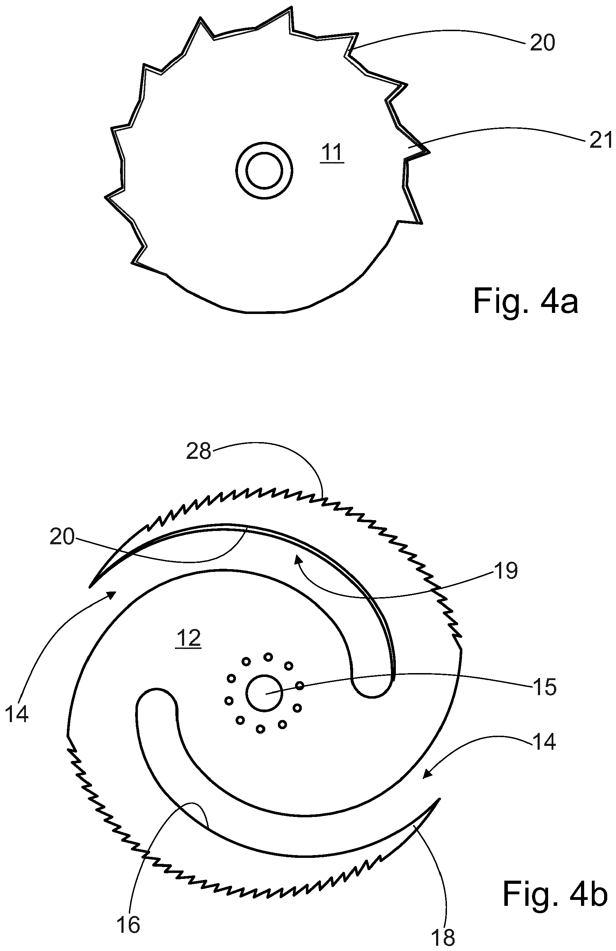

The counter construction and the rotating force member set against each other in the axial direction at a distance from each other bring about the cut-off of the material. Advantageously, a cutting effect facilitating the cut-off of the material is arranged in the cutting device. For example, the cutting effect can be implemented so that the spiral aperture 16 has a chamfered blade 19 at its outer border essentially over the entire length of the spiral aperture 16. The chamfered blade is illustrated in the upper spiral aperture of Figure 4b. Secondly, the cutting effect can also be implemented in such a way that the counter construction 11 includes a chamfer 20 for providing the cutting effect. The chamfer 20 is illustrated in Figure 4a. Thirdly, both a chamfered blade and a chamfer can be used in the same cutting device. In this case, generally, the chamfer of the counter construction and/or the chamfered blade of the spiral aperture form a cutter, which functions as continuously operating scissors. Hence, the cut-off of the material is reliable and the cutting result is neat. At the same time, it is avoided that material is thrown around like in conventional crushers and cutters.

The counter construction 11 advantageously includes toothing 21. The toothing can prevent the material to be cut from shifting with the spiral aperture. In practice, the tooth extends beyond the outer border of the spiral aperture. Thus, an invariably closing gap is formed, which finally cuts off the material. In any case, the profile draws the material inwards simultaneously cutting off the material together with the counter construction. In Figures 2a and 2b, the material 22, here a sprout 23 growing in the ground, is currently in the gap and, already partly cut off, has dug into the sharpened counter construction 11. The material can also be other material growing in the ground, such as weed, grass, reed, sprout forest or horsetail. Generally, vertical material is cut, but branch tips, for example, can be cut by tilting the cutting device, which is impossible with known cutting devices. The cutting device can be placed in almost any position, when it is fastened to the boom of a mobile work machine equipped with a rototilt.

The cutting can be further adjusted by arranging different toothing 21 in the different positions of the counter construction 11. Thus, by turning or rotating the counter construction, it is possible to select a suitable cutting method and, if necessary, to change a new and suitable counter construction for the material to be cut. More generally, the counter construction is arranged to be fastened in an alternative position. In Figure 4a, the major part of the counter construction 11 is equipped with toothing 21 provided with a chamfer 20. Of these teeth, six are large and four are small. Thus, the teeth form two sets of toothing that are different from each other. In addition, approximately a third of the counter construction is straight without toothing and without a chamfer. The straight point can be used, for example, for cutting grass, when the force member is provided with a chamfered blade. For example, when cutting sprout forest, sharpened toothing prevents escape of twigs and the cut-off is instantly made.

According to Figures 2a and 2b, the counter construction 11 is part of the frame 10 and toothing 21 is only at the front edge of the counter construction 11. Advantageously, the counter construction 11 is a separate piece, detachably fastened to the frame 10. Thus, a suitable counter construction can be selected for each cutting event. On the other hand, by turning the counter construction, it is possible to use a new and sharp cutting surface. At the same time, a worn counter construction can be replaced with a new one. In the embodiment of Figure 3b, toothing 21 is advantageously provided throughout.

In the invention, the force member 12 is arranged at a distance from the counter construction 11. In other words, the counter construction and the force member are against each other, almost connected to each other. Thus, the outer edge of the force member and the counter construction are close to each other, which corresponds to the operation of scissors. In particular, a chamfered blade or a chamfer provides an efficient solution, which also works for thin material, such as grass. However, the same construction also works for wood; for example, it is possible to cut sprout forest. Here, both the force member and the counter construction are straight sheet constructions. One or both of them can also be made slightly convex or curved so that the components only contact be their outer edges, i.e. their cutting surfaces. This reduces friction providing at the same time self-sharpening of cutting surfaces.

The force member 12 and the counter construction 11 are placed coaxially. Thus, the cutting effect is realised in the same way in different directions. Particularly in the embodiment of Figure 3b, the cutting device can be used in almost each direction. Here the frame 10 is a sort of fork, to which the counter construction 11 and the force member 12 are supported. The frame is fastened, for example, to a loader or a beam assembly of an excavator, thus being able to move the cutting device in different directions in a desired way and, for example, to cut grass around tree plants. For the fastening, the frame 10 has suitable fasteners 24, the principle of which is shown in Figures 3a and 3b.

Generally, the frame 10 includes between 2 and 6 force members 12, each with its own counter construction 11. Thus, the efficiency and working width of the cutting device can be easily increased. In the embodiments of Figures 3a and 3b, each force member 12 is equipped with its own power source, which is advantageously a hydraulic motor 30. On the other hand, force members can be connected to each other with a transmission using the power take-off of the mobile work machine, for example. In the embodiment of Figures 2a - 2c, the frame 10 is a box 25, on top of which first the counter construction 11 and then the force member 12, as the topmost element, are arranged. Here, one hydraulic motor 30 is used and power is transmitted to two force members with a belt, for example. The transmission member 26 is illustrated with a broken line in Figure 2c. The belt allows some sliding, functioning thereby as a fuse. When driven, the force members rotate and have kinetic energy, which together with the cutting effect efficiently cuts off the material even with low power. When the hydraulic motor is stopped, the force members continue rotating enabling the belt sliding to decelerate the force members without stressing the hydraulic motor. On the other hand, impacts against the force member are not directly transmitted to the hydraulic motor, but the belt dampens the impacts.

In the embodiments set forth, the force member 12 is supported to the frame 10 with a shaft and a bearing 27. A hydraulic motor can be installed as an extension of the shaft, in which case the design of the cutting device is simple yet resistant. In Figure 3a, the frame 10 covers a large part of the force member 12 and only the front edge is open. Such a construction is protective. In Figures 2a - 2c, the protections partly covering the moving parts are not shown.

In the embodiment of Figure 3a, the force members 12 rotate in opposite directions towards the edge parts of the frame 10. Correspondingly, in the embodiment of Figure 2a, the force members 12 rotate in the same direction. The force members can also rotate towards the centre part of the cutting device. In all cases, the material is cut off very soon after reaching the profile. In tests performed on the prototype, the force members were rotated at about 600 revolutions per minute. Thus, the cutting device can be moved forward at a speed as high as six kilometres per hour. The diameter of the force member is approximately 600 mm and the width of the spiral aperture is 50 mm. For rotating such a cutting device, a torque of only a few tens of newton metres was required. According to Figure 2a, the force member is advantageously made of a thicker sheet than the counter construction. Firstly, a thin counter construction can be easily made sharp. On the other hand, a force member that is thicker and larger than the counter construction, and particularly its tip, resists stress. At the same time, the mass of the force member increases, the force member as such thus operating as a fly wheel, which equalises the operation of the cutting device and reduces the power requirement. Advantageously, the tip of the spiral is sharp, in which case, for example, when contacting thicker wood, the tip digs into the wood taking part of the tree trunk. Then the rest of the wood fits into the following spiral groove.

In some of the embodiments set forth, the force member 12 has outer toothing 28.

Thus, wood 29 that does not fit into the spiral aperture can be sawn by rotating the force member 12 in the opposite direction relative to the cutting direction. Such a situation is illustrated in Figure 3b. The direction of rotation during sawing is illustrated with an arrow in Figure 3b. Normally, the force member 12 is rotated in the other direction with the tip 18 of the force member 12 preceding, as shown by the arrows in Figure 2a.

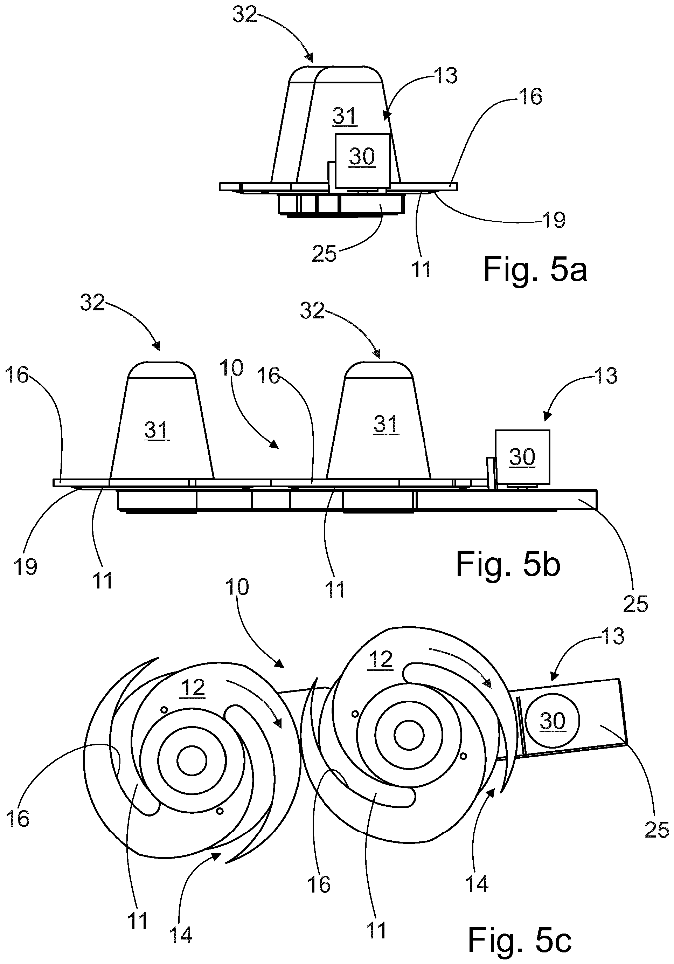

Figures 5a - 5c illustrate a modification of the cutting device. Here, the outer surface of the force member 12 is smooth. In addition, a truncated cone 31 preventing formation of an air vortex is placed on top of the force member 12. Without a cone, a lightweight material, such as grass, would be caught by an air vortex and would harmfully accumulate on top of the force member. More generally, the force member 12 includes an air deflector 32 for preventing formation of an axial air vortex.

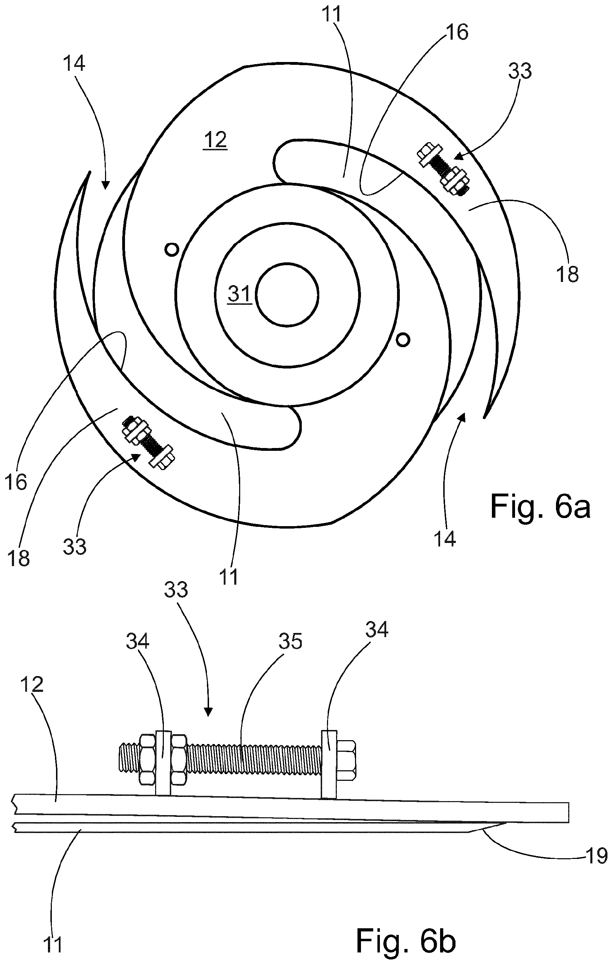

A curved force member has been previously mentioned. The force member can be formed with a curved shape, the force member and the counter construction thus contacting each other by their cutting surfaces. Figure 6a illustrates one force member 12 provided with adjusting members 33 for modifying the shape of the force member 12, particularly that of the tip 18. Here, adjusting members 33 include two support points 34 fastened to the surface of the force member 12 with an adjustor bolt 35 placed between them. The adjustor bolt is used , according to the invention to change the distance between the support points, which simultaneously changes the curvature of the force member. Hence, it is possible to adjust the force of contact of the force member relative to the counter construction. At the same time, the contact force can be kept sufficient while the constructions may be subjected to wear. With a suitable contact force, friction and thus wear can be kept under control, yet such that self-sharpening is realised. Instead of an adjustor bolt, an adjustable spring can be used to bend the force member against the counter construction.

## Claims

1. Cutting device, which includes:
- a frame (10) and a circular counter construction (11) fitted in the frame (10),
- a force member (12) rotatably supported to the frame (10) and extending in the radial direction up to the circular counter construction (11), said circular counter construction (11) and force member (12) being arranged to overlap each other in the axial direction relative to the axis of rotation (15) of the force member (12) having a sharp tip (18), and
- equipment (13) for rotating the force member (12) and thereby for cutting material (22) in cooperation with the circular counter construction (11),
and between the frame (10) and the material (22) is a feeding direction, which is crosswise with the axis of rotation (15) of the force member (12), and the force member (12) includes a profile (14), which is a spiral aperture (16) for taking the material (22) to be cut against the circular counter construction (11) for cutting the material, **characterised in that** the force member (12) includes adjusting members (33) arranged in the tip (18) for changing the curvature of the force member (12) by bending the tip (18).

2. Cutting device according to Claim 1, **characterised in that** the force member (12) has between 1 and 6, more preferably between 2 and 4 profiles (14).

3. Cutting device according to Claim 1 or 2, **characterised in that** the spiral aperture (16) has a chamfered blade (19) at its outer border, essentially over the entire length of the spiral aperture (16).

4. Cutting device according to any of Claims 1 to 3, **characterised in that** the circular counter construction (11) includes a chamfer (20) for providing the cutting effect.

5. Cutting device according to any of Claims 1 to 4, **characterised in that** the circular counter construction (11) includes toothing (21).

6. Cutting device according to Claim 5, **characterised in that** there are different toothings (21) at different points of the circumference of the circular counter construction (11).

7. Cutting device according to any of Claims 1 to 6, **characterised in that** the circular counter construction (11) is a separate component, detachably fastened to the frame (10).

8. Cutting device according to Claim 7, **characterised in that** the circular counter construction (11) is arranged to be fastened in an alternative turned position.

9. Cutting device according to any of Claims 1 to 8, **characterised in that** the force member (12) is arranged at a distance from the circular counter construction (11) in the axial direction.

10. Cutting device according to any of Claims 1 to 9, **characterised in that** the force member (12) and the circular counter construction (11) are placed coaxially.

11. Cutting device according to any of Claims 1 to 10, **characterised in that** the frame (10) includes between 2 and 6 force members (12), each equipped with its own circular counter construction (11).

## Patentansprüche

1. Schneidvorrichtung, die Folgendes umfasst:
- einen Rahmen (10) und ein kreisförmiges Gegenstück (11), das im Rahmen (10) eingepasst ist,
- ein Kraftelement (12), das am Rahmen (10) drehbar gelagert ist und in radialer Richtung bis zum kreisförmigen Gegenstück (11) reicht, wobei das kreisförmige Gegenstück (11) und das Kraftelement (12) so angeordnet sind, dass sie einander in axialer Richtung zur Drehachse (15) des Kraftelements (12) überlappen, das eine scharfe Spitze (18) hat, und
- eine Vorrichtung (13) zum Drehen des Kraftelements (12) und somit zum Schneiden des Materials (22) gemeinsam mit dem kreisförmigen Gegenstück (11),
wobei zwischen dem Rahmen (10) und dem Material (22) eine Zufuhreinrichtung ist, die quer zur Drehachse (15) des Kraftelements (12) liegt, und das Kraftelement (12) ein Profil (14) umfasst, das eine Spiralöffnung (16) ist, um das Material (22) aufzunehmen und gegen das kreisförmige Gegenstück (11) zum Schneiden des Materials zu führen, **dadurch gekennzeichnet, dass** das Kraftelement (12) Einstellelemente (33) umfasst, die an der Spitze (18) angeordnet sind, um die Krümmung des Kraftelements (12) durch Biegen der Spitze (18) zu ändern.

2. Schneidvorrichtung nach Anspruch 1, **dadurch gekennzeichnet, dass** das Kraftelement (12) 1 bis 6, vorzugsweise 2 bis 4 Profile (14) hat.

3. Schneidvorrichtung nach Anspruch 1 oder 2, **dadurch gekennzeichnet, dass** die Spiralöffnung (16) am Außenrand eine abgeschrägte Schneide (19) hat, notwendigerweise über die gesamte Länge der Spiralöffnung (16).

4. Schneidvorrichtung nach jedem der Ansprüche 1-3, **dadurch gekennzeichnet, dass** das kreisförmige Gegenstück (11) eine Fase (20) zur Erzielung des Schneideffekts umfasst.

5. Schneidvorrichtung nach jedem der Ansprüche 1-4, **dadurch gekennzeichnet, dass** das kreisförmige Gegenstück (11) eine Verzahnung (21) umfasst.

6. Schneidvorrichtung nach Anspruch 5, **dadurch gekennzeichnet, dass** es unterschiedliche Verzahnungen (21) an verschiedenen Punkten des Kreisumfangs des kreisförmigen Gegenstücks (11) gibt.

7. Schneidvorrichtung nach jedem der Ansprüche 1-6, **dadurch gekennzeichnet, dass** das kreisförmige Gegenstück (11) eine separate Komponente ist, die abnehmbar am Rahmen (10) befestigt ist.

8. Schneidvorrichtung nach Anspruch 7, **dadurch gekennzeichnet, dass** das kreisförmige Gegenstück (11) so angeordnet ist, dass es alternativ in gedrehter Position befestigt werden kann.

9. Schneidvorrichtung nach jedem der Ansprüche 1-8, **dadurch gekennzeichnet, dass** das Kraftelement (12) in axialer Richtung in einem Abstand zum kreisförmigen Gegenstück (11) angeordnet ist.

10. Schneidvorrichtung nach jedem der Ansprüche 1-9, **dadurch gekennzeichnet, dass** das Kraftelement (12) und das kreisförmige Gegenstück (11) koaxial angeordnet sind.

11. Schneidvorrichtung nach jedem der Ansprüche 1-10, **dadurch gekennzeichnet, dass** der Rahmen (10) 2 bis 6 Kraftelemente (12) umfasst, von denen jedes mit einem eigenen kreisförmigen Gegenstück (11) ausgestattet ist.

## Revendications

1. Dispositif de coupe, qui inclut :
- un châssis (10) et un contre-support circulaire (11) qui s'enclenche sur le châssis (10),
- une pièce de force (12) en rotation fixée au châssis (10) et se déplaçant dans le sens radial jusqu'au contre-support circulaire (11), ledit contre-support circulaire (11) et ladite pièce de force (12) étant disposés de sorte à se superposer l'un l'autre dans le sens de l'axe de rotation (15) de la pièce de force (12), laquelle possède une pointe acérée (18), et
- un équipement (13) permettant d'assurer la rotation de la pièce de force (12) et donc de couper le matériau (22) avec l'aide du contre-support circulaire (11),
et entre le châssis (10) et le matériau (22) se trouve le sens d'avancée pour la coupe, qui est transversal à l'axe de rotation (15) de la pièce de force (12), et la pièce de force (12) inclut un profil (14) d'ouverture en spirale (16) permettant de placer le matériau (22) à couper contre le contre-support circulaire (11) afin de couper le matériau, **caractérisé en ce que** la pièce de force (12) inclut des pièces d'ajustement (33) placées dans la pointe (18) et permettant de modifier la courbure de la pièce de force (12) en pliant la pointe (18).

2. Dispositif de coupe conformément à la revendication 1, **caractérisé en ce que** la pièce de force (12) a entre 1 et 6, de préférence entre 2 et 4, profils (14).

3. Dispositif de coupe conformément à la revendication 1 ou 2, **caractérisé en ce que** l'ouverture en spirale (16) dispose d'une lame chanfreinée (19) au niveau de sa bordure extérieure, presque sur toute la longueur de l'ouverture en spirale (16).

4. Dispositif de coupe conformément à l'une quelconque des revendications 1 à 3, **caractérisé en ce que** le contre-support circulaire (11) inclut un chanfrein (20) pour produire l'effet tranchant.

5. Dispositif de coupe conformément à l'une quelconque des revendications 1 à 4, **caractérisé en ce que** le contre-support circulaire (11) inclut une denture (21).

6. Dispositif de coupe conformément à la revendication 5, **caractérisé en ce qu'**il existe différentes dentures (21) à différents points de la circonférence du contre-support circulaire (11).

7. Dispositif de coupe conformément à l'une quelconque des revendications 1 à 6, **caractérisé en ce que** le contre-support circulaire (11) est un composant distinct, fixé de manière amovible au châssis (10).

8. Dispositif de coupe conformément à la revendication 7, **caractérisé en ce que** le contre-support circulaire (11) peut être fixé dans différentes positions en le tournant.

9. Dispositif de coupe conformément à l'une quelconque des revendications 1 à 8, **caractérisé en ce que** la pièce de force (12) est disposée à une certaine distance du contre-support circulaire (11) dans le sens axial.

10. Dispositif de coupe conformément à l'une quelconque des revendications 1 à 9, **caractérisé en ce que** la pièce de force (12) et le contre-support circulaire (11) sont placés de manière coaxiale.

11. Dispositif de coupe conformément à l'une quelconque des revendications 1 à 10, **caractérisé en ce que** le châssis (10) inclut entre 2 et 6 pièces de force (12), chacune dotée de son propre contre-support circulaire (11).
